# EUROPEAN PATENT SPECIFICATION

(11) **EP 0 462 081 B1**
(45) Date of publication and mention of the grant of the patent: **10.08.1994**
(21) Application number: 91830255.5
(22) Date of filing: 11.06.1991
(51) Int. Cl.: B23P 19/02

(54) **An automatic machine for force-fitting drilled, shaped elements onto a shaft**
Automatische Maschine zum Aufpressen gebohrter und geformter Teile auf eine Welle
Machine automatique pour insérer à force des éléments troués et formés sur un arbre

(30) Priority: 15.06.1990 IT 6743990
(43) Date of publication of application: 18.12.1991
(73) Proprietor: FIAT AUTO S.p.A., 10135 Torino (IT)
(72) Inventor: Burgio, Antonio, I-10024 Moncalieri (Torino) (IT)
(74) Representative: Gerbino, Angelo

(56) References cited:
- DE-A- 2 838 995
- DE-C- 257 247
- GB-A- 2 156 937

## Description

The present invention relates to an automatic machine for force-fitting drilled, shaped elements in the form of cams, onto a shaft which is intended, in particular, to become the camshaft of an internal combustion engine.

More particularly the present invention relates to an automatic machine of the type indicated in the preamble of the enclosed claim 1.

DE-A-2838995 discloses a machine of the above indicated kind, wherein a rotating plate supports a plurality of cams inserted in respective seats located along its circumferential periphery. The machine further comprises means for lowering and raising a shaft perpendicularly through the seats of the plate, so that the cams are force-fitted onto the shaft.

The object of the present invention is to provide a machine of the type indicated above whose operation is simple and reliable and which can force-fit shaped and drilled elements onto their shaft automatically and under cold conditions.

The subject of the present invention is an automatic machine of the type indicated above, characterised in that it further comprises the features listed in the characterising portion of the enclosed claim 1.

A further subject of the present invention is a method for force-fitting drilled, shaped elements, particularly cams, onto a shaft which is intended, in particular, to become the camshaft of an internal combustion engine, the method being characterised in that it provides for the use of an automatic machine of the type described above.

The machine according to the invention has the advantage that it does not need expensive and complex heating devices for shrink-fitting the cams onto their shafts.

Further advantages and characteristics of the present invention will become clear from the detailed description which follows, with reference to the appended drawings, provided purely by way of non-limiting example, in which:
Figure 1 is a perspective view of a machine according to the invention, from the front,
Figure 2 is a perspective view of the machine of Figure 1, from the rear,
Figure 3 is a section taken on the line III-III of Figure 1,
Figures 4 to 8 show schematically a detail of the machine of the preceding drawings in different operating positions,
Figure 9 shows, in perspective, another detail of the machine, indicated by the arrow IX in Figure 1,
Figure 10 shows a further detail of the machine, indicated by the arrow X in Figure 9,
Figures 11 and 12 are sections of a mechanism of the machine, taken on the line XI-XI of Figure 9 in two different operating conditions, and
Figure 13 is a perspective view of a further detail of the machine.

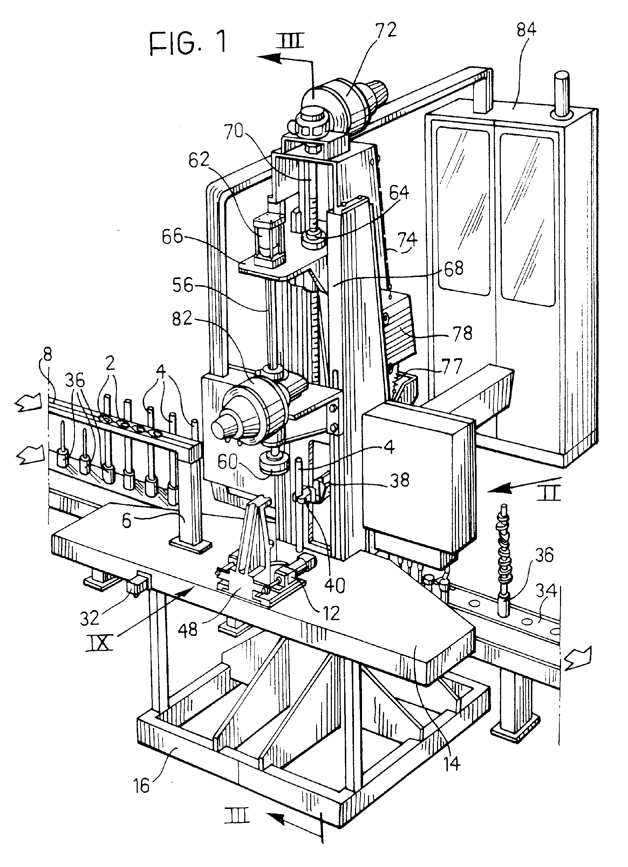

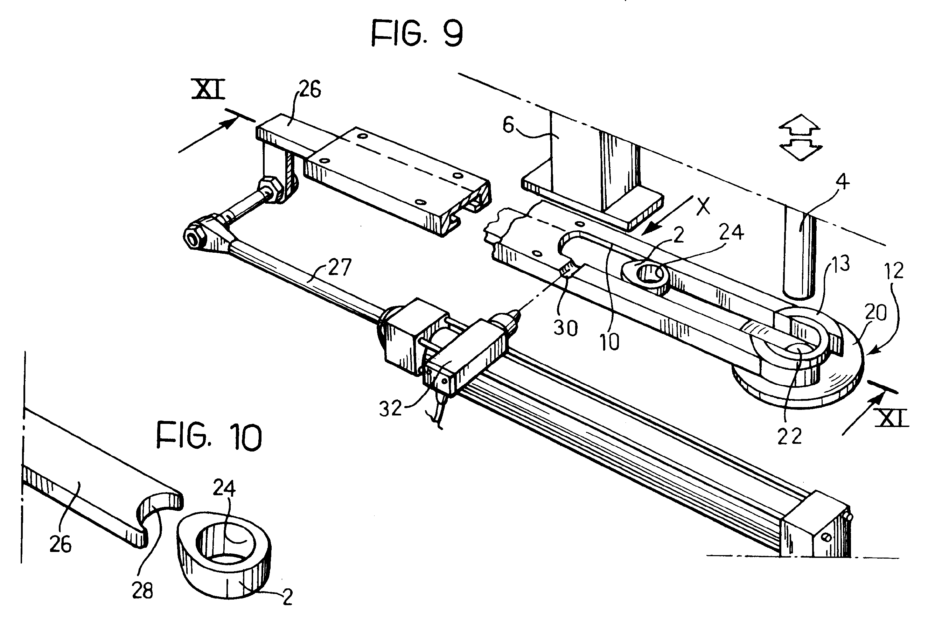

An automatic machine (Figure 1) for force-fitting cams 2 onto a respective shaft 4 which is intended to become the camshaft of an internal combustion engine includes a magazine 6 in which the cams 2, supplied by a conveyor belt 8, are stacked one upon another. The bottom cam 2a of the stack in the magazine 6 (Figures 9 to 12) is arranged in a supply channel 10 which leads to an assembly seat 12. The seat 12, which is positioned on a work table 14 supported by a support structure 16 (Figure 1), has a shaped side wall 18 (Figure 9) whose profile corresponds to that of the facing portions of the cams 2 and is open on one side to enable their insertion, as will be described in further detail below. The assembly seat 12 also has a base wall 20 with a hole 22 of a larger diameter than the holes 24 in the cams 2.

A slider 26 driven by actuator means 27 of known type is movable in the supply channel 10, its front portion 28 (Figure 10) being shaped to correspond with the profile of the facing portion of the cam 2.

A photoelectric safety device 32 of known type is located adjacent a slot 30 in the wall of the channel 10 in the region in which the bottom cam 2a is housed to indicate the presence of the cam 2a.

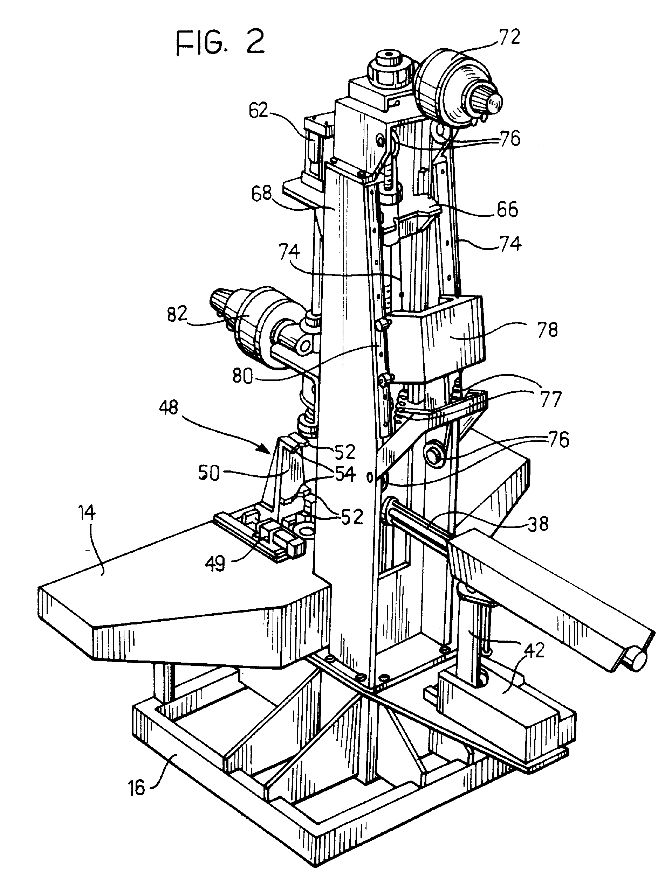

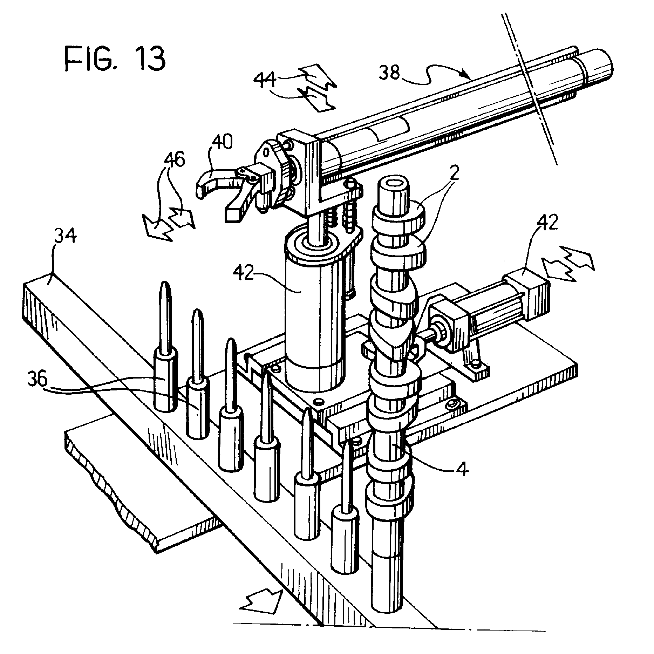

The machine also includes (Figures 2, 3 and 13) a conveyor belt 34 from the top of which project a plurality of support rods 36 on each of which is fitted a respective hollow shaft 4 whose outside diameter is slightly larger than the diameters of the holes 24 in the cams 2. An operator arm 38 is mounted near the conveyor belt 34 and its end facing the conveyor belt 34 supports a gripper 40 for gripping the shafts 4 with actuator means of known type. The arm 38 is movable by actuator means 42 of known type, both along a first line parallel to the support rods 36, indicated by the arrows 44 in Figure 13, and along a second line, indicated by the arrows 46 in Figure 13, which is perpendicular to the general plane defined by the conveyor belt 34 and the shafts 4 fitted on the support rods 36.

An abutment bracket 48 (Figures 1 to 3) is movable on the work table 14, along the line indicated by the arrows 46, under the action of known actuator means 49. The bracket 48 faces the gripper 40 of the operator arm 38 and, when the machine is in the rest condition, is arranged on the opposite side of the conveyor belt 34 and the assembly seat 12 for the cams 2 from the operator arm 38. The bracket 48 includes a vertical element 50 from which several spaced-apart horizontal elements 52 project, each having a recess 54 for supporting the shaft 4 as will become clearer from the following operational description.

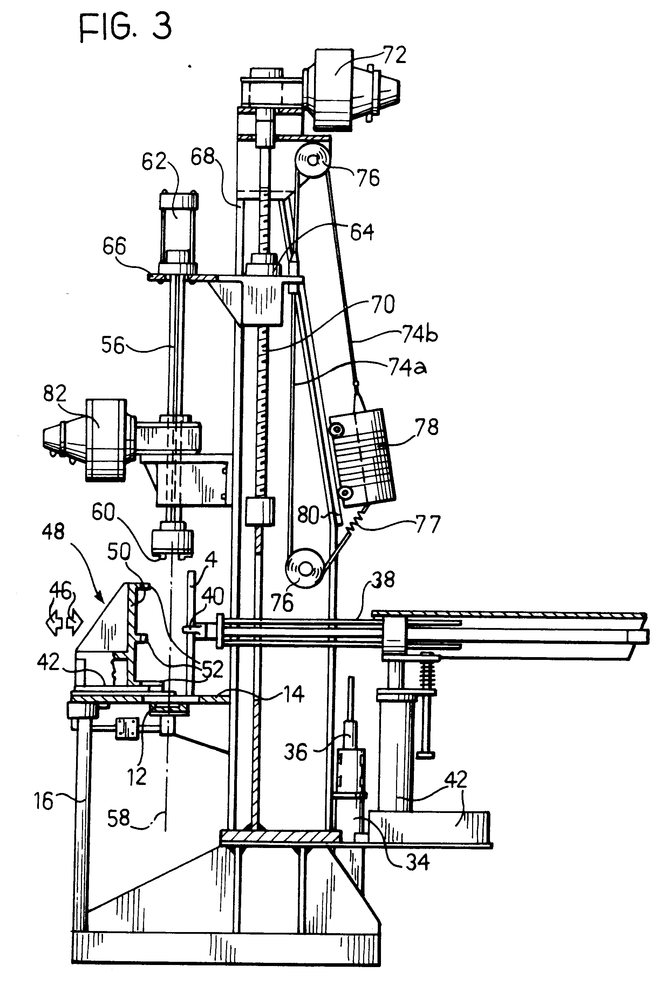

The machine also includes a chuck 56 (Figures 1 to 3) mounted vertically on the axis 58 (Figure 3) which is defined by the hole 22 in the assembly seat 12 and will hereinafter be termed the working axis. The end of the chuck 56 which faces the assembly seat 12 has jaws 60 operated by known actuator means 62 for ,ripping the end of a shaft 4, as will be described below. A nut 64 connected to the chuck 56 by a plate 66 is mounted, between guide pillars 68 fixed to the support structure 16 on a lead screw 70 rotatable by a geared motor unit 72. In this way the chuck 56 can translate along the working axis 53 as a consequence of the activation of the geared motor unit 72. The nut 64 is also connected to a counterweight mechanism for regulating the movement of the chuck 56 (Figures 2 and 3). This mechanism comprises a pair of cables 74 passing around respective pairs of pulleys 76 which are freely rotatable on the support structure 16 and define two substantially vertical portions 74a and 74b of each cable 74, one of which is connected to the plate 66 and the other of which incorporates a spring 77 and a weighted trolley 78 slidable on rails 80 inclined to the vertical and fixed to the support structure 16.

A further geared motor unit 82 enables the chuck 56 to rotate about its own axis.

The various parts of the machine described hitherto are controlled by a central computer 84 (Figure 1) which regulates the operation of the machine, stopping it, for example, when the photoelectric device 32 indicates that there are no cams 2 in the supply channel 10.

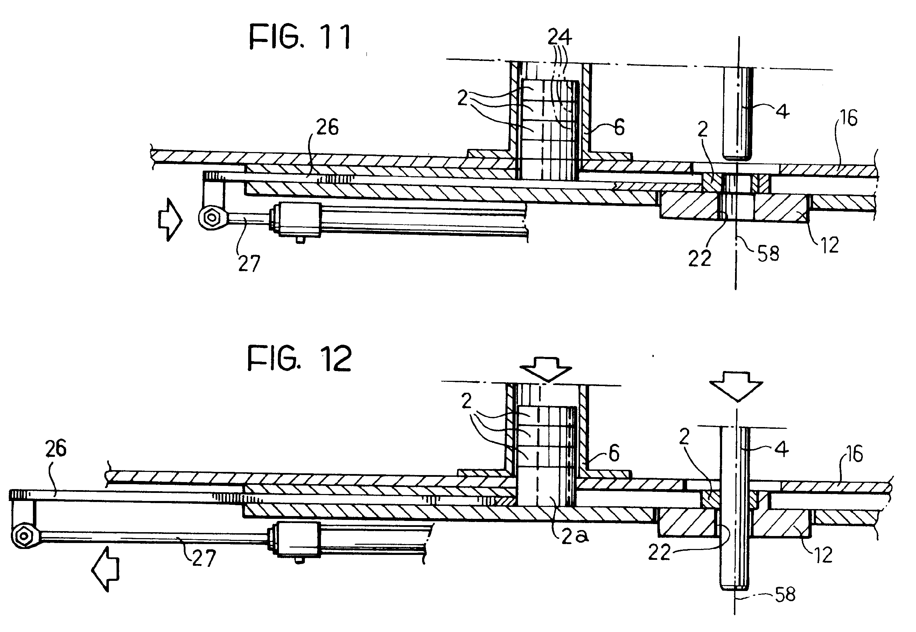

When the machine is in operation, the slider 26 (Figures 9 and 11) slides in the channel 10 and inserts the bottom cam 2 from the magazine 6 in the assembly seat 12 so that the hole 24 in the cam 2 is aligned on the working axis 58, the slider 26 simultaneously acting as a support for the stack of cams 2 still in the magazine 6.

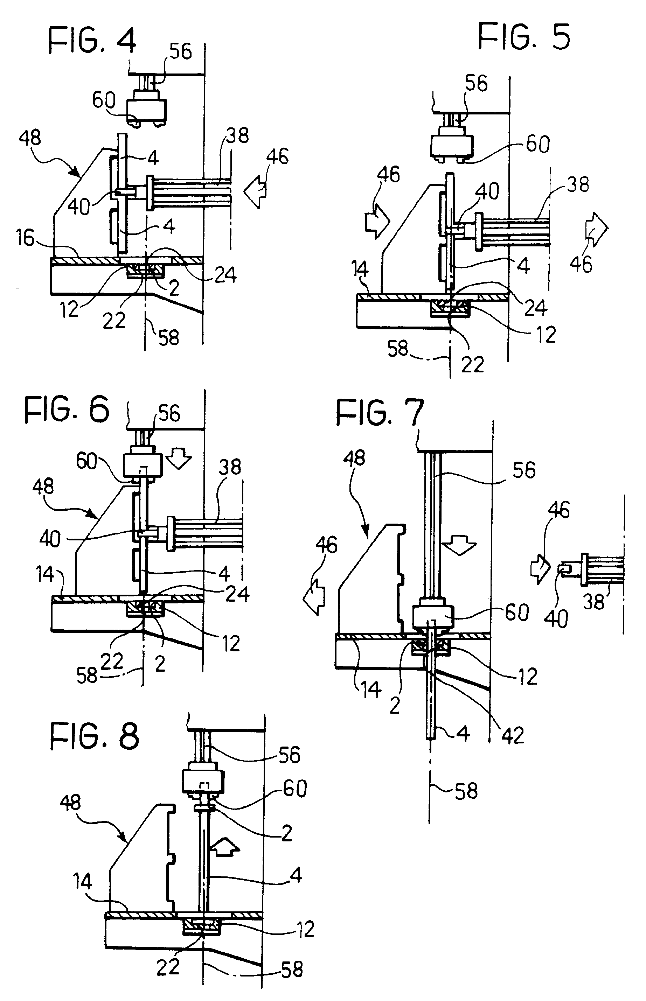

At the same time, the operator arm 38 is translated along the line indicated by the arrows 46 (Figure 13), the gripper 40 grips a shaft 4 supported by a rod 36, and the arm 38 rises along the line indicated by the arrows 44, thus releasing the shaft 4 from the rod 36. The arm is then lowered and translated, again along the line indicated by the arrows 46, to bring the shaft 4 into contact with the abutment bracket 48 (Figure 4). This now moves, still along the line indicated by the arrows 46 but in the opposite direction (Figure 5), pushing the shaft 4 supported by the gripper 40 until it is aligned on the working axis 58. At this point, after it has been lowered (Figure 6), the chuck 56 grips the upper end of the shaft 4 with its jaws 60, whilst the operator arm 38 and the bracket 48 return to their starting positions.

The chuck 56 is then lowered further (Figure 7) to insert the shaft 4 in the hole 24 in the cam 2 positioned in the assembly seat 12 and in the hole 22 in the seat 12. The cam 2 is thus fixed to the shaft 4 as a result of the interference between the shaft and the hole 24 in the cam 2. Finally (Figure 8), the shaft 4 is raised by the chuck 56 and the assembly seat 12 is thus ready to receive another cam 2.

The slider 26 (Figure 12) now slides back along the supply channel 10 and, as it passes the portion opposite the magazine 6, causes the new bottom cam 2a to fall into the channel 10 for insertion in the assembly seat 12 during the subsequent advance of the slider 26. The chuck 56 is then lowered and raised again, force-fitting a new cam 2 on the shaft 4.

Clearly, this cycle of operations is repeated for a number of times equal to the number of cams to be fitted on the shaft 4. If the cams are to be arranged in different orientations, the geared motor unit 82 rotates the chuck 56, and hence the shaft 4, during the interval between the insertion of two successive cams in the assembly seat 12.

When the cams 2 have been fitted on the shaft 4, the gripper 40 carried by the operator arm 38 again grips the shaft 4 which is released by the jaw 60 of the chuck 56. The arm 38 is then retracted along the line indicated by the arrows 46 and moves along the line indicated by the arrows 44 (Figure 13) to replace the camshaft produced on a support rod 36 of the conveyor belt 34.

Naturally, the principle of the invention remaining the same, the details of construction and forms of embodiment may be varied widely with respect to those described and illustrated purely by way of example, without thereby departing from its scope.

## Claims

1. An automatic machine for force-fitting drilled, shaped elements in the form of cams (2), onto a shaft (4) which is intended, in particular, to become the camshaft of an internal combustion engine, comprising:
means (6, 10, 25) for successively supplying the cams (2) and positioning them in an assembly seat (12) whose wall (20) which is intended to face the hole (24) in the cam (2) has a hole (22) with which the hole (24) in the cam (2) is arranged coaxially,
means (34, 38, 48) for offering up the shaft (4) and positioning it on a working axis (58) which coincides with the axis of the hole (22) in the assembly seat (12),
means (56) for moving the shaft (4) which is positioned on the working axis (58) along that axis so that the cam (2) is force-fitted onto the shaft (4) when the latter enters the coaxial holes (22, 24) in the cam (2) and the assembly seat (12),
said automatic machine being characterised in that it comprises means (34, 38) for removing from the working axis (58) the shaft (4), on which one or more cams (2) have been force-fitted, and in that the means for offering up, positioning and removing the shaft (4) comprise:
a conveyor belt (34) from the top of which projects a plurality of support rods (36) on each of which a respective shaft (4) is fitted,
an operator arm (38) one end of which faces the conveyor belt (34) and supports a gripper (40) for gripping the shafts (4), the arm being movable under the action of actuator means (42) both along a first line (44) parallel to the support rods (36) and along a second line (46) perpendicular to the general plane defined by the shafts (4) fitted on the respective support rods (36), and
an abutment bracket (48) which faces the gripper (40) on the opposite side of the conveyor belt (34) and the assembly seat (12) for the cams (2) when the machine is inoperative, and is movable under the action of actuator means (49) along the second line (46); during the positioning of a shaft (4) after it has been gripped by the gripper (40), the operator arm (38) is first raised along the first line (44) to remove the shaft (4) from the support rod (36) and is then translated along the said line (46) towards the abutment bracket (48) with which the shaft (4) comes into contact, the bracket (48) then moving in turn in the opposite direction along the second line (46) until the shaft (4), still supported by the gripper (40), is aligned on the working axis (58).

2. An automatic machine according to Claim 1, characterised in that the assembly seat (12) includes a shaped side wall (18) with a profile which corresponds to that of the facing portion of the cam (2) and a portion which is open to enable the insertion of the cam (2).

3. An automatic machine according to any one of the preceding claims, characterised in that the means for supplying and positioning the cams (2) comprise:
a magazine (6) in which the cams (2) are stacked one upon another,
a supply channel (10) which leads to the assembly seat (12) and in which the bottom cam (2a) of the stack of cams housed in the magazine (6) is positioned, and
a slider (26) which is movable in the channel (10) under the action of actuator means (27) and which, when it slides in one direction, pushes the bottom cam (2a) towards the assembly seat (12), simultaneously acting as a support for the stack of cams (2) housed in the magazine, and, when it slides in the opposite direction, enables a further cam (2) to fall into the channel (10).

4. An automatic machine according to Claim 3, characterised in that it includes a photoelectric device (32) adjacent a slot (30) in the wall of the channel (10) in the region in which the bottom cam (2a) is housed for indicating the presence of the bottom cam (2a).

5. An automatic machine according to Claim 3, characterised in that the front portion (28) of the slider (26) which is intended to push the cam (2a) towards the assembly seat (12) corresponds in shape to the facing portion of the cam (2a).

6. An automatic machine according to any one of the preceding Claims, characterised in that the abutment bracket (48) includes a vertical element (50) from which several spaced-apart horizontal elements (52) project, each having a recess (54) for supporting the shaft (4).

7. An automatic machine according to any one of the preceding claims, characterised in that the means for moving the shaft (4) comprise a chuck (56) which is mounted vertically on the working axis (58), has means (64, 70, 72) for sliding it along the working axis (58) and, on its end which faces the assembly seat (12), has jaws (60) operated by actuator means (62) for gripping the shaft (4) which has been positioned on the working axis (58) by the positioning means (38, 48).

8. An automatic machine according to claim 7, characterised in that the means for sliding the chuck (56) along the working axis (58) comprise a nut (64) which is connected rigidly to the chuck (56) by means of a plate (66) arranged between guide pillars (68) fixed to a support structure (16), and which is mounted on a lead screw (70) rotatable by a geared motor unit (72).

9. An automatic machine according to claim 8, characterised in that the nut (64) is connected to a counterweight mechanism for regulating the movement of the chuck (56), the mechanism comprising a pair of cables (74) which pass around respective pairs of pulleys (76) freely rotatable on the support structure (16), the pulleys (76) defining two substantially vertical portions (74a, 74b) of each cable (74), one of which is connected to the plate (66) and the other of which incorporates a spring (77) and a ballasted trolley (78) slidable on rails (80) fixed to the support structure (16) and inclined to the vertical.

10. An automatic machine according to any one of Claims 7 to 9, characterised in that the chuck (56) has drive means, such as a geared motor unit (82), for rotating the chuck (56) about its own axis so that several cams (2) fitted in succession on the shaft (4) supported by the chuck (56) can be oriented differently.

11. A method for force fitting drilled, shaped elements, particularly cams (2), on a shaft (4) which is intended, in particular, to become the camshaft of an internal combustion engine, for the use of a machine according to any one of the preceding claims.

## Patentansprüche

1. Automat zum Preßpassen gebohrter und geformter Elemente in Form von Nocken (2) auf eine Welle (4), die insbesondere dazu bestimmt ist, die Nockenwelle einer Brennkraftmaschine zu werden, umfassend:
Mittel (6, 10, 25) zum aufeinanderfolgenden Zuführen der Nocken (2) und Positionieren derselben in einem Montagesitz (12), wobei die Wandung (20) des Montagesitzes (12), die dazu bestimmt ist, dem Loch (24) in dem Nocken (2) zugewandt zu sein, ein Loch (22) aufweist, zu welchem das Loch (24) in dem Nocken (2) koaxial angeordnet ist,
Mittel (34, 38, 48) zum Darbieten der Welle (4) und Positionieren derselben auf einer Arbeitsachse (58), die mit der Achse des Lochs (22) in dem Montagesitz (12) zusammenfällt,
Mittel (56) zum Bewegen der auf der Arbeitsachse (58) positionierten Welle (4) längs jener Achse, so daß der Nocken (2) auf die Welle (4) preßgepaßt wird, wenn letztere in die koaxialen Löcher (22, 24) in dem Nocken (2) und dem Montagesitz (12) eintritt,
wobei der Automat dadurch gekennzeichnet ist, daß er Mittel (34, 38) umfaßt, um die Welle (4), auf die einer oder mehrere Nocken (2) preßgepaßt worden sind, von der Arbeitsachse (58) zu entfernen, und daß die Mittel zum Darbieten, Positionieren und Entfernen der Welle (4) umfassen:
ein Förderband (34), von dessen Oberseite eine Mehrzahl Halterungsstangen (36) absteht, wobei auf jede dieser Halterungsstangen (36) eine respektive Welle (4) gepaßt ist,
einen Bedienungsarm (38), dessen eines Ende dem Förderband (34) zugewandt ist und einen Greifer (40) zum Ergreifen der Wellen (4) haltert, wobei der Arm unter der Wirkung von Stellmitteln (42) sowohl längs einer zu den Halterungsstangen (36) parallel verlaufenden, ersten Geraden (44) als auch längs einer zweiten Geraden (46) bewegbar ist, die orthogonal zu der durch die Wellen (4) definierten Hauptebene verläuft, welche Wellen (4) auf die respektiven Halterungsstangen (36) gepaßt sind, und
einen Anschlagbock (48), der dem Greifer (40) auf der entgegengesetzten Seite des Förderbands (34) und dem Montagesitz (12) für die Nocken (2) zugewandt ist, wenn der Automat nicht in Betrieb ist, und unter der Wirkung von Stellmitteln (49) längs der zweiten Geraden (46) bewegbar ist; wobei der Bedienungsarm (38) während des Positionierens einer Welle (4), nachdem diese von dem Greifer (40) ergriffen worden ist, zunächst längs der ersten Geraden (44) angehoben wird, um die Welle (4) von der Halterungsstange (36) abzunehmen, und dann längs der Geraden (46) zu dem Anschlagbock (48) hin bewegt wird, mit welchem die Welle (4) in Kontakt gelangt, und der Bock (48) dann seinerseits in entgegengesetzter Richtung längs der zweiten Geraden (46) bewegt wird, bis die weiterhin von dem Greifer (40) gehaltene Welle (4) auf der Arbeitsachse (58) ausgerichtet ist.

2. Automat nach Anspruch 1, **dadurch gekennzeichnet**, daß der Montagesitz (12) eine geformte Seitenwandung (18) aufweist, deren Profil jenem des zugewandten Abschnitts des Nockens (2) entspricht, sowie einen Abschnitt aufweist, der zur Ermöglichung des Einführens des Nockens (2) offen ist.

3. Automat nach einem der vorhergehenden Ansprüche, **dadurch gekennzeichnet**, daß die Mittel zum Zuführen und Positionieren der Nocken (2) umfassen:
ein Magazin (6), in dem die Nocken (2) übereinander gestapelt sind,
einen Zufuhrkanal (10), der zu dem Montagesitz (12) führt und in dem der untere Nocken (2a) des in dem Magazin (6) aufgenommenen Stapels von Nocken positioniert ist, und
einen Schieber (26), der in dem Kanal (10) unter der Wirkung von Stellmitteln (27) bewegbar ist und der, wenn er sich in einer Richtung verschiebt, den unteren Nocken (2a) zu dem Montagesitz (12) hin stößt, wobei er gleichzeitig als Halterung für den in dem Magazin aufgenommenen Stapel von Nocken (2) wirkt, und der, wenn er sich in der entgegengesetzten Richtung verschiebt, ermöglicht, daß ein weiterer Nockens (2) in den Kanal (10) fällt.

4. Automat nach Anspruch 3, **dadurch gekennzeichnet**, daß er eine photoelektrische Vorrichtung (32) zum Anzeigen des Vorhandenseins des unteren Nockens (2a) aufweist, die einem Schlitz (30) in der Wandung des Kanals (10) benachbart angeordnet ist, wobei der Schlitz (30) in dem Bereich der Wandung des Kanals (10) vorgesehen ist, in dem der untere Nocken (2a) aufgenommen ist.

5. Automat nach Anspruch 3, **dadurch gekennzeichnet**, daß der vordere Abschnitt (28) des Schiebers (26), der dazu bestimmt ist, den Nocken (2a) zum Montagesitz (12) hin zu stoßen, in seiner Gestalt dem zugewandten Abschnitt des Nockens (2a) entspricht.

6. Automat nach einem der vorhergehenden Ansprüche, **dadurch gekennzeichnet**, daß der Anschlagbock (48) ein vertikales Element (50) umfaßt, von welchem mehrere voneinander beabstandete horizontale Elemente (52) abstehen, die jeweils eine Ausnehmung (54) zum Haltern der Welle (4) aufweisen.

7. Automat nach einem der vorhergehenden Ansprüche, **dadurch gekennzeichnet**, daß die Mittel zum Bewegen der Welle (4) ein Futter (56) umfassen, welches auf der Arbeitsachse (58) vertikal angebracht ist, Mittel (64, 70, 72) aufweist, um es längs der Arbeitsachse (58) zu verschieben, und an seinem dem Montagesitz (12) zugewandten Ende von Stellmitteln (62) betätigte Klauen (60) zum Ergreifen der von den Positioniermitteln (38, 48) auf der Arbeitsachse (58) positionierten Welle (4) aufweist.

8. Automat nach Anspruch 7, **dadurch gekennzeichnet,** daß die Mittel zum Verschieben des Futters (56) längs der Arbeitsachse (58) eine Mutter (64) umfassen, die mittels einer Platte (66) starr mit dem Futter (56) verbunden und auf einer durch eine mit Getriebe versehene Motoreinheit (72) drehbaren Leitspindel (70) angebracht ist, wobei die Platte zwischen an einem Halterungsaufbau (16) befestigten Führungssäulen (68) angeordnet ist.

9. Automat nach Anspruch 8, **dadurch gekennzeichnet**, daß die Mutter (64) mit einem Gegengewichtmechanismus verbunden ist zum Regulieren der Bewegung des Futters (56), wobei der Mechanismus ein paar Kabel (74) umfaßt, die um ein paar entsprechende, frei an dem Halterungsaufbau (16) drehbare Riemenscheiben (76) verlaufen, wobei die Riemenscheiben (76) zwei im wesentlichen vertikale Abschnitte (74a, 74b) jedes Kabels (74) festlegen, von denen einer mit der Platte (66) verbunden ist und von denen der andere eine Feder (77) und einen mit Ballast versehenen Wagen (78) aufweist, der auf an dem Halterungsaufbau (16) befestigten und zur Vertikalen geneigten Schienen (80) verschiebbar ist.

10. Automat nach einem der Ansprüche 7 bis 9, **dadurch gekennzeichnet**, daß das Futter (56) Antriebsmittel, bspw. eine mit Getriebe versehene Motoreinheit (82), aufweist, um das Futter (56) um seine eigene Achse zu drehen, so daß mehrere in Aufeinanderfolge auf die von dem Futter (56) gehaltene Welle (4) gepaßte Nocken (2) unterschiedlich orientiert sein können.

11. Verfahren zum Preßpassen gebohrter und geformter Elemente, insbesondere Nocken (2), auf eine Welle (4), die insbesondere dazu bestimmt ist, die Nockenwelle einer Brennkraftmaschine zu werden, zur Verwendung eines Automaten nach einem der vorhergehenden Ansprüche.

## Revendications

1. Machine automatique pour l'emmanchement à force d'éléments percés, profilés, sous la forme de cames (2), sur un arbre (4) qui est destiné en particulier à devenir l'arbre à cames d'un moteur à combustion interne, comprenant :
des moyens (6, 10, 25) destinés à amener successivement les cames (2) et à les positionner dans un logement d'assemblage (12) dont la paroi (20) qui est destinée à faire face au trou (24) de la came (2) présente un trou (22) coaxialement auquel le trou (24) de la came (2) est disposé,
des moyens (34, 38, 48) destinés à présenter l'arbre (4) et à le positionner sur un axe de travail (58) qui coïncide avec l'axe du trou (22) du logement d'assemblage (12),
des moyens (56) servant à déplacer l'arbre (4) qui est positionné sur l'axe de travail (58) le long de cet axe de manière que la came (2) soit emmanchée à force sur l'arbre (4) lorsque ce dernier pénètre dans les trous coaxiaux (22, 24) de la came (2) et du logement d'assemblage (12),
ladite machine automatique étant caractérisée en ce qu'elle comprend des moyens (34, 38) servant à éloigner de l'axe de travail (58) l'arbre (4) sur lequel une ou plusieurs cames (2) ont été emmanchées à force, et en ce que les moyens servant à présenter, positionner et enlever l'arbre (4) comprennent :
une courroie transporteuse (34) sur la surface supérieure de laquelle font saillie une pluralité de tiges supports (36) sur chacune desquelles un arbre respectif (4) est monté ;
un bras opérateur (38) dont une extrémité fait face à la courroie transporteuse (34) et supporte une pince (40) destinée à serrer les arbres (4), le bras pouvant se déplacer sous l'action de moyens actionneurs (42), aussi bien le long d'une première ligne (44) parallèle aux tiges supports (36) que le long d'une deuxième ligne (46) perpendiculaire au plan général défini par les arbres (4) montés sur les tiges supports (36) respectives, et
une console de butée (48) qui fait face à la pince (40) de l'autre côté de la courroie transporteuse (34) et du logement d'assemblage (12) destiné à recevoir les cames (2) lorsque la machine est inactive, et peut se déplacer sous l'action de moyens actionneurs (49) le long de la deuxième ligne (46) ; pendant le positionnement d'un arbre (4) après qu'il a été serré par la pince (40), le bras opérateur (38) est tout d'abord relevé le long de la première ligne (44) pour séparer l'arbre (4) de la tige support (36), puis il est avancé en translation le long de ladite ligne (46) vers la console de butée (48) avec laquelle l'arbre (4) entre en contact, la console (48) se déplaçant alors à son tour dans le sens opposé le long de la deuxième ligne (46) jusqu'à ce que l'arbre (4), encore supporté par la pince (40), soit aligné sur l'axe de travail (58).

2. Machine automatique selon la revendication 1, caractérisée en ce que le logement d'assemblage (12) comprend une paroi latérale profilée (18) possédant un profil qui correspond à celui de la portion de la came (2) qui lui fait face, et une portion qui est ouverte pour permettre l'insertion de la came (2).

3. Machine automatique selon une quelconque des revendications précédentes, caractérisée en ce que les moyens servant à acheminer et positionner les cames (2) comprennent :
un magasin (6) dans lequel les cames (2) sont empilées les unes sur les autres,
une rainure d'amenée (10) qui mène au logement d'assemblage (12) et dans laquelle est positionnée la came inférieure (2a) de la pile de cames logée dans le magasin (6), et
un coulisseau (26) qui peut se déplacer dans la rainure (10) sous l'action de moyens actionneurs (27) et qui, lorsqu'il coulisse dans un sens, pousse la came inférieure (2a) vers le logement d'assemblage (12), en se comportant en même temps comme un support pour la pile de cames (2) logée dans le magasin, tandis que, lorsqu'il coulisse dans le sens opposé, il permet à une autre came (2) de tomber dans la rainure (10).

4. Machine automatique selon la revendication 3, caractérisée en ce qu'elle comprend un dispositif photo-électrique (32) adjacent à une fente (30) ménagée dans la paroi de la rainure (10) dans la région dans laquelle la came inférieure (2a) est logée pour signaler la présence de la came inférieure (2a).

5. Machine automatique selon la revendication 3, caractérisée en ce que la portion avant (28) du coulisseau (26) qui est destinée à pousser la came (2a) vers le logement d'assemblage (12) correspond par sa forme à la portion de la came (2a) qui lui fait face.

6. Machine automatique selon une quelconque des revendications précédentes, caractérisée en ce que la console de butée (48) comprend un élément vertical (50) sur lequel font saillie plusieurs éléments horizontaux espacés (52) dont chacun présente une encoche (54) pour donner appui à l'arbre (4).

7. Machine automatique selon une quelconque des revendications précédentes, caractérisée en ce que les moyens servant à déplacer l'arbre (4) comprennent un mandrin (56) qui est monté verticalement sur l'axe de travail (58) , possède des moyens (64, 70, 72) destinés à le faire coulisser le long de l'axe de travail (58) et présente, sur son extrémité qui fait face au logement d'assemblage (12), des mâchoires (60) commandées par des moyens actionneurs (62) servant à serrer l'arbre (4) qui a été positionné sur l'axe de travail (58) par les moyens de positionnement (38, 48).

8. Machine automatique selon la revendication 7, caractérisée en ce que les moyens servant à faire coulisser le mandrin (56) le long de l'axe de travail (58) comprennent un écrou (64) qui est relié rigidement au mandrin (56) au moyen d'une plaque (66) agencée entre des colonnes de guidage (68) fixées à une structure support (16), et qui est monté sur une vis (70) de transformation du mouvement pouvant être entraînée en rotation par une unité moteur-réducteur (72).

9. Machine automatique selon la revendication 8, caractérisée en ce que l'écrou (64) est relié à un mécanisme de contrepoids servant à régler le mouvement du mandrin (56), le mécanisme comprenant une paire de câbles (74) qui passent autour de paires respectives de poulies (76) montées librement rotatives sur la structure support (16), les poulies (76) définissant dans chaque câble (74) deux portions sensiblement verticales (74a, 74b) dont l'une est solidaire de la plaque (66) et dont l'autre comprend un ressort (77) et un chariot lesté (78) qui peut coulisser sur des rails (80) fixés à la structure support (16) et inclinés sur la verticale.

10. Machine automatique selon une quelconque des revendications 7 à 9, caractérisée en ce que le mandrin (56) possède des moyens d'entraînement, tel qu'une unité moteur-réducteur (82), servant à faire tourner le mandrin (56) autour de son axe de manière que plusieurs cames (2) montées successivement sur l'arbre (4) supporté par le mandrin (56) puissent être orientées différemment.

11. Procédé pour emmancher à force des éléments percés, profilés, notamment des cames (2), sur un arbre (4) qui est destiné, en particulier, à devenir l'arbre à cames d'un moteur à combustion interne, destiné à l'utilisation d'une machine selon une quelconque des revendications précédentes.
